# EUROPÄISCHE PATENTSCHRIFT

(11) **EP 1 352 596 B1**
(45) Veröffentlichungstag und Bekanntmachung des Hinweises auf die Patenterteilung: **28.06.2006**
(21) Anmeldenummer: 03007578.2
(22) Anmeldetag: 02.04.2003
(51) Int. Cl.: A47C 31/12, A47C 23/00

(54) **Mechanismus zur Umlenkung von Stützflächen**
Mechanism for modifying a supporting surface
Mécanisme permettant de modifier une surface support

(30) Priorität: 07.04.2002 DE 10215286; 31.03.2003 DE 10314709
(43) Veröffentlichungstag der Anmeldung: 15.10.2003
(73) Patentinhaber: Erker, Christian, 61250 Usingen (DE); GRAMMER AG, 92224 Amberg (DE)
(72) Erfinder: Erker, Christian, 61250 Usingen (DE)
(74) Vertreter: Hannke, Christian

(56) Entgegenhaltungen:
- EP-A- 1 163 866
- DE-C- 618 124
- FR-A- 2 123 761
- GB-A- 2 336 998

## Beschreibung

Die Erfindung betrifft einen Mechanismus zur Umlenkung von Stützfächen.
Kleine Personen haben bei gebräuchlichen Polstermöbeln, insbesondere Polstersesseln,oft Mühe die stützende Rücklehnenfläche zu erreichen. Für grosse Personen dagegen ist oft die Sitzflächenhöhe zu kurz. Ausreichend lange Beinauflagen für grosse Personen können oft nicht tief genug heruntergeklappt werden,weil der Boden erreicht wird.

Aufgabe der Erfindung ist es deshalb einen Umlenkungsmechanismus zu konstruieren, der es gestattet, die Stützflächen, beispielsweise die Sitzflächen von Polstermöbeln derart umzulenken, dass geschlossene und zueinander glatt kombinierbare Flächen entstehen, die nahezu in beliebig gestaltbare Formen gebracht werden können.

Die Aufgabe wurde durch einen teleskopartigen Umlenkmechanismus gelöst, bestehend aus einer Teleskopstange 1, die sich in einer in einem Teleskoprahmen befindlchen Teleskophülse 2 hin und her bewegt, wobei in Abhänhigkeit von der Gestalt der Teleskopstange 1 und des dazu passenden Teleskopschafts die verschiedenartigen Formgestaltungen resultieren.

Die Aufgabenstellung wurde gelöst durch den Umlenkmechanismus für Stützflächen nach Anspruch 1.

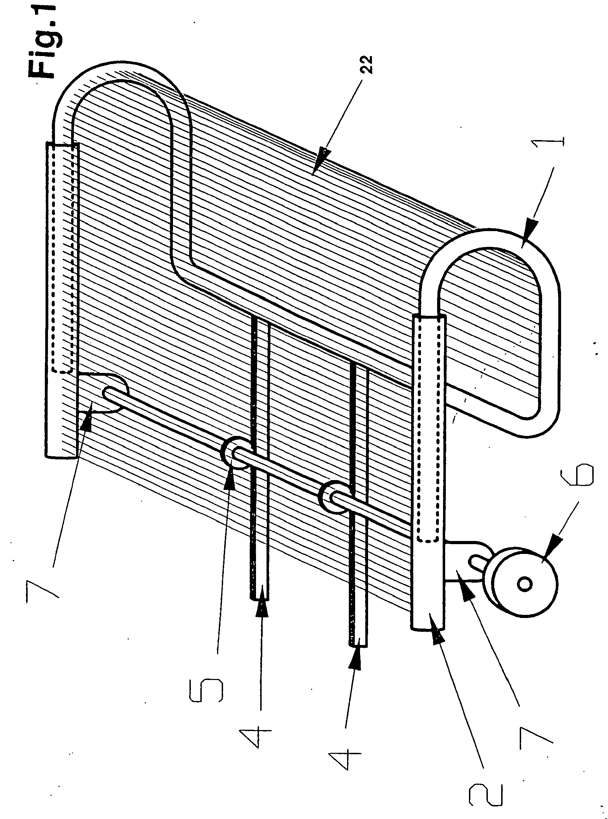

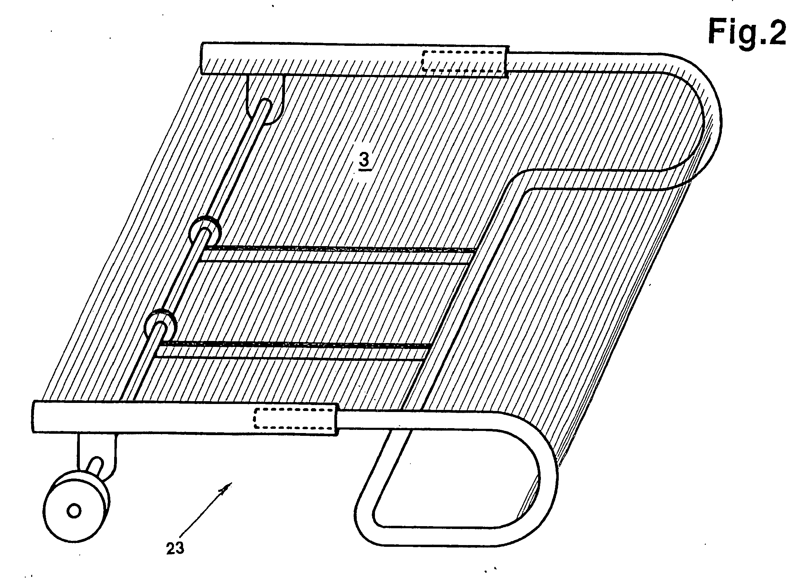

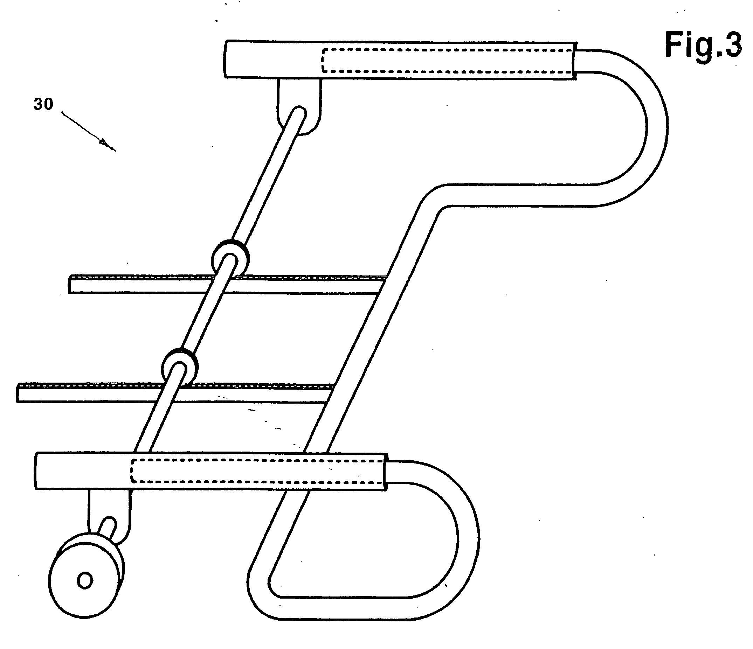

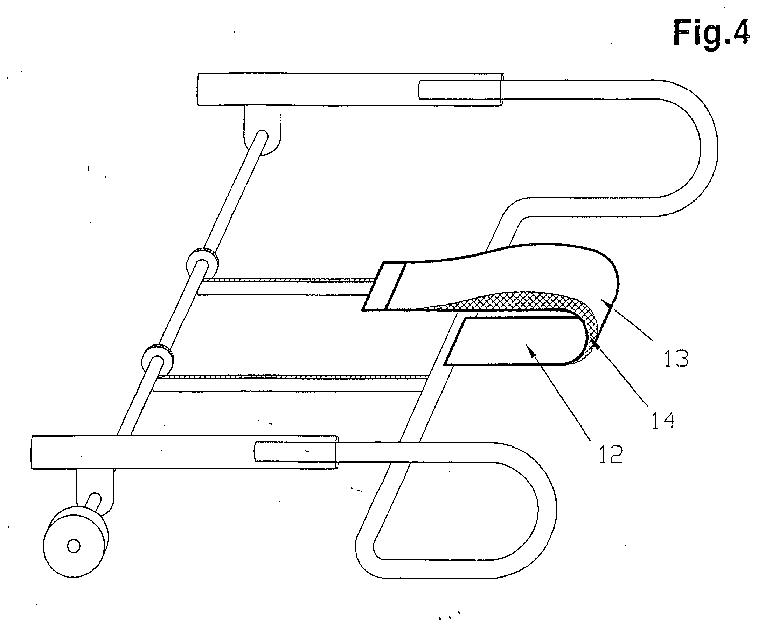

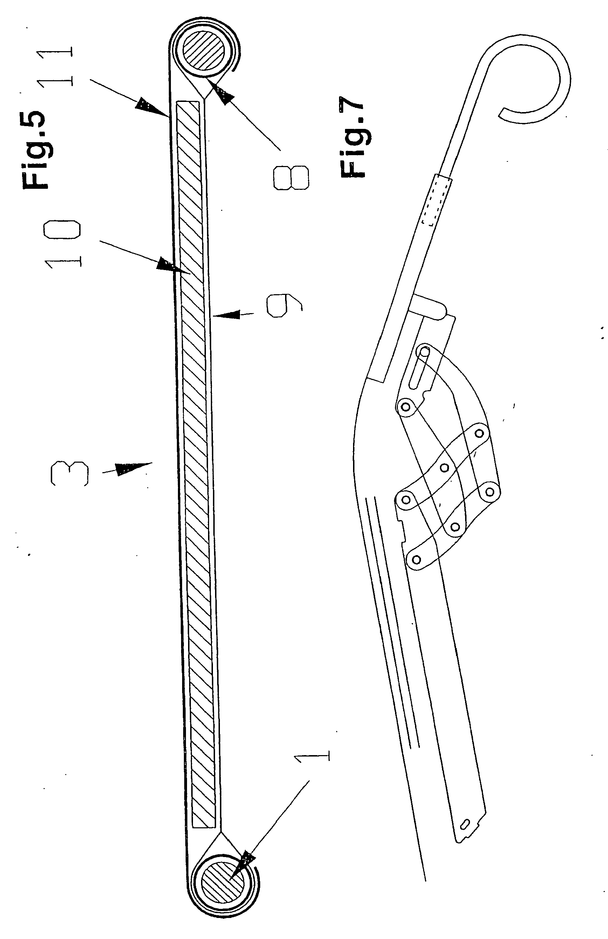

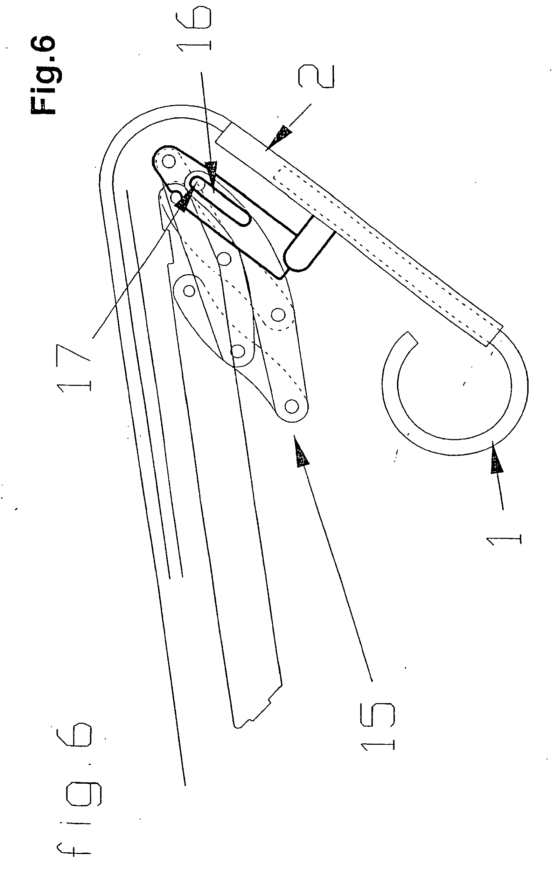

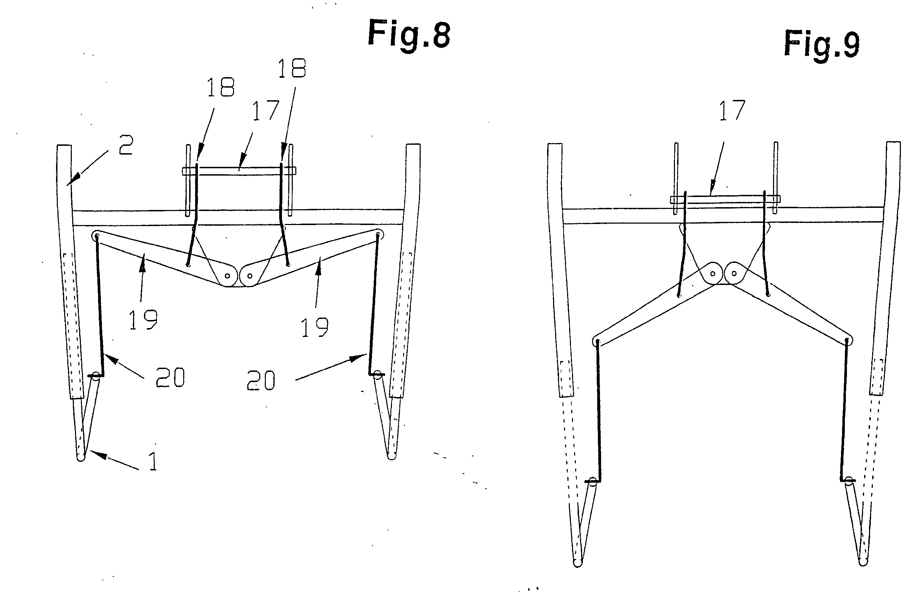

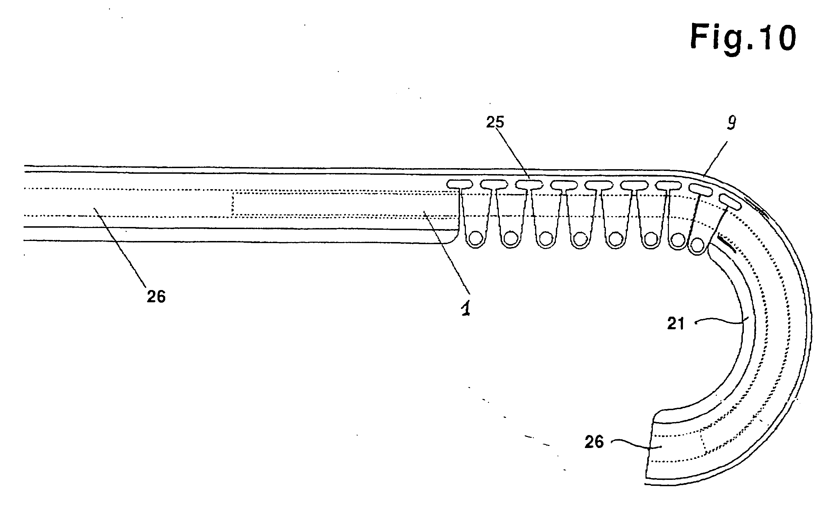

Die Figuren 1 bis 15 beschreiben die Erfindung.

Fig.1 zeigt die Kurzversion der Stützfläche 3 im "eingefahrenen Zustand".
Die Teleskopstange1 ist nahezu voll im Teleskoprahmen mit Teleskophülse 2 versenkt. Figur 1 zeigt somit den Kurzzustand der Stützfläche 3. Dies ist die vorteilhafte Version für Personen mit kleiner Körpergrösse.Fig. 1 zeigt des weiteren den Mechanismus zur Hubregulierung des Teleskopsystems mit den Zahnstangen 4,den Zahnrädern 5, den Lagern 7 und dem Handdrehrad 6. Durch das Drehen des Handdrehrades in der einen oder anderen Richtung,wird die Stützfläche 3 kürzer oder länger. 22 stellt den verformbaren Bereich der Stützfläche 3 dar.

Fig.2 zeigt die Langversion der Stützfläche im "ausgefahrenen Zustand", in der Perspektive 23

Fig.3 zeigt die Perspektivansicht 24 des Rahmenfragments mit dem Teleleskopmechanismus.

Fig.4 zeigt eine Variante zur Oberschenkelmuskulatur-Entspannung. Gemäß dieser Variante wird am Verbindungsstück der Teleskopstangen ein federnder 14 Support 12 mit einer Gleitfläche 13 für die Bespannung angebracht.

Fig. 5 zeigt die Teleskopstangen 1 im Querschnitt und dass die Stützfläche 3 über die Gleitelemente 8 und diese abdeckend, mit den Teleskopstangen verbunden ist. 9 stellt die Bespannung dar, die wunschgemäß flexibel elastisch oder weniger flexibel elastisch sein kann, 10 die Polsterung die beispielsweise aus Textil- oder Schaumstoff bestehen kann und 11 den Abdeckbezug.

Fig. 6 zeigt einen Klappmechanismus 15 mittels dem sich die Beinauflage verkürzen lässt. Beim verkürzenden Umklappen findet eine Verschiebung des Achsbolzens 17 im Langnut 16 statt.

Fig. 7 zeigt den Klappmechanismus schematisch in der Seitenansicht.

Fig.8 zeigt wie die Kraftwirkung vom Achsbolzen 17 über die Schubstangen 18 und die Hebelwirkung der Schenkel 19, verstärkt mittels der Schubstangen 20, auf die Teleskopstangen 1 übertragen werden. Fig.8 im eingefahrenen Kurzzustand der Teleskope.

Fig.9 ist wie Figur 8,jedoch im ausgefahrenen Langzustand der Teleskope.

Fig. 10 zeigt schematisch die längenneutrale Biegezone 25 mit dem an diese anschliessenden vorderen nicht verformbaren aber bewegbaren Abschlußelement 21, mittels dem ein synchroner Bewegungshub der Teleskopstangen 1 erzielt wird.
Das führt dazu, dass ein Antriebsmechanismus für das Ein- und Ausfahren des verformbaren Stützflächenteils 22 alternativ nicht erforderlich ist.Die Betätigung der "Vorwärts- und und Rückwärtsbewegung" der Stützflächenveränderung erfolgt in dem Falle durch das entsprechende Verschieben der Bespannung 9 in die bezüglichen Richtungen.

Das Abschlußelement 21 wird von einer in den Gleitelementen eingearbeiteten Biegezone auf einen festen Abstand zu den Teleskophülsen 2 gehalten. Dessen Winkellage ist abhängig von der jeweiligen Position der Teleskopstangen 1.Unterschiedliche Positionen der Teleskopstangen bewirken eine Verwindung des Abschlußelements 21 zwischen den Lagern 29, so, dass dessen Verwindungssteifheit eine synchrone Verschiebung der Teleskopstangen bewirkt.
Eine Veränderung der Winkellage des Abschlußelements durch den Benutzer führt zur gewünschten Verschiebung der Teleskopstangen 1, wodurch auf einen mechanischen Antrieb der Telekopstangen verzichtet werden kann.

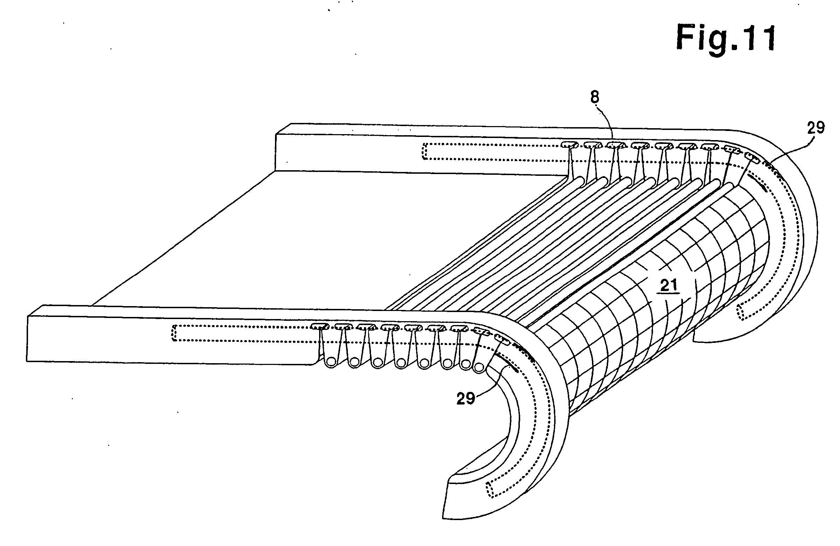

Fig. 11 zeigt perpektivistisch den verformbaren Stützflächenbereich 22 mit dem Abschlußelement 21.

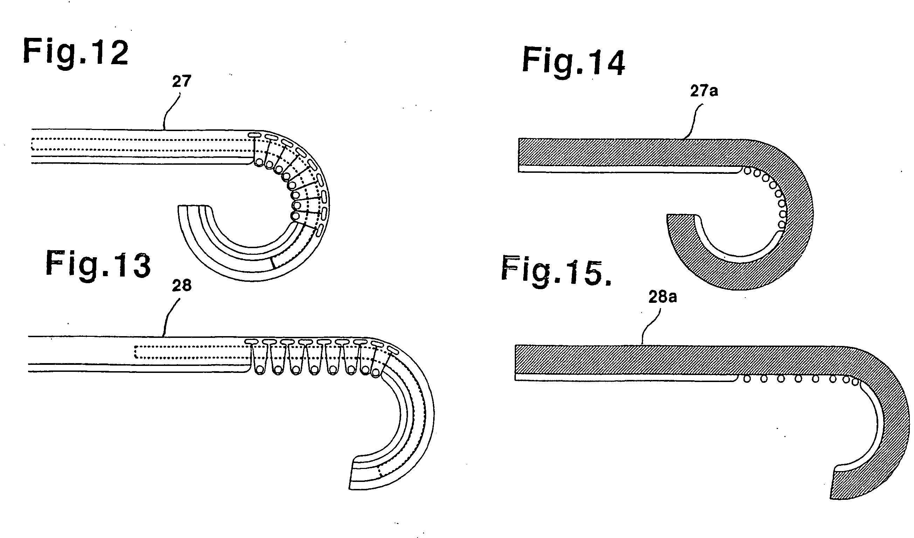

Fig. 12 zeigt einen Teleskopschenkel in der Kurzform 27 "mit eingefahrener Verformung" der Stützfläche 22,

Fig.13 zeigt den Teleskopschenkel in der Langform 28 "mit ausgefahrener Verformung" der Stützfläche 22.

Fig. 14 und 15 zeigen die aus optischen und praktischen Gründen verdeckten Telekopschenkel 27a und 28a entsprechend den Figuren 12 und 13.

Die vorliegende Erfindung leistet einen Beitrag zum technischen Fortschritt im Bereich der Gesundheitspflege. Dem Erfindungsbestreben lag auch das Prinzip der ökologischen Resourceneffizienz zugrunde.Dies kam zum Ausdruck bei der Entwicklung eines werkstoffsparenden Mechanismusprinzips und die alternative Stützflächenverformungsmöglichkeit ohne äussere Energienutzung.
Die folgende Positionszahlenliste beschreibt ergänzend die Figuren.

### Positionszahlenliste

- 1: Teleskopstange
- 2: Teleskoprahmen mit Teleskophülse
- 3: Stützfläche
- 4: Zahnstange
- 5: Zahnrad
- 6: Handdrehrad zum Bewegen der Zahnstange
- 7: Rahmenlager
- 8: Gleitelement
- 9: Bespannung
- 10: Polsterelement (eventuell Polyschaum oder Textilfilaments)
- 11: Abdeckbezug
- 12: Support
- 13: Gleitfläche
- 14: Federung
- 15: Umklappmechanismus
- 16: Langnut
- 17: Achsbolzen
- 18: Schubstange
- 19: Hebel
- 20: Schubstange
- 21: Abschlußelement
- 22: Verformbarer Bereich der Stützfläche 3
- 23: Perspektivansicht des Stützflächen mit Rahmen
- 25: Biegezone längenneutral
- 26: Teleskopstangenkanal
- 27: Teleskopschenkel in der Kurzversion
- 27a: Teleskopschenkel in der Kurzversion mit verdecktem Teleskopmechanismus
- 28: Teleskopschenkel in der Langversion
- 28a: Teleskopschenkel in der Langversion mit verdecktem Teleskopmechanismus
- 29: Lager zwischen 22 und 25
- 30: Rahmenversion des Gesamtmechanismus mit Teleskop- und Antriebsystem

## Patentansprüche

1. Stützfläche (3) für Sitze und Liegen deren Flächengebilde im Längsrichtung verformbar sind,**dadurch gekennzeichnet, dass** deren Verformbarkeit durch einen Mechanimus vollzogen wird der aus einem Rahmen mit Teleskophülsen (2) besteht in denen sich mindestens zwei Telekopstangen (1) bewegen die jeweils am Ende gebogen sind und von Gleitelementen (8) umschlossen sind, an denen der verformbare Bereich (22) der Stützfläche befestigt ist.

2. Stützfläche nach Anspruch 1,**dadurch gekennzeichnet, dass** die Telekopstangen (1) über das gebogene Ende hinaus, noch einen Staubereich besitzen.

3. Stützfläche nach Anspruch 1,**dadurch gekennzeichnet,dass** die gebogenen Enden der Teleskopstangen kreis- oder elipsenförmig gebogen sind.

4. Stützfläche nach Anspruch 1,**dadurch gekennzeichnet,dass** an den verformbaren Bereich (22), sich ein nicht verformbares aber bewegbares Abschlußelement (21) anschliesst, das verwindungssteif ist,wodurch ein synchroner Bewegungshub der Teleskopstangen (1) gewährleistet wird.

5. Stützfläche nach Anspruch 1 bis 4, **dadurch gekennzeichnet, dass** die Mechanismusteile der Teleskopschenkel (27) und (28) ,aus optischen und praktischen Gründen, verdeckt situiert sind (27a) und (28a).

## Claims

1. Support surface (3) for seats and beds, the surface structures of which are deformable in the longitudinal direction, **characterized in that** the deformability thereof is achieved by a mechanism which consists of a frame with telescopic sleeves (2) in which at least two telescopic rods (1) move, each of said telescopic rods being bent at the end and being surrounded by sliding elements (8) to which the deformable region (22) of the support surface is attached.

2. Support surface according to Claim 1, **characterized in that** the telescopic rods (1) have a storage area beyond the bent end.

3. Support surface according to Claim 1, **characterized in that** the bent ends of the telescopic rods are bent in a circular or elliptical shape.

4. Support surface according to Claim 1, **characterized in that** the deformable region (22) is adjoined by a non-deformable but movable end element (21) which is rigid against torsion, as a result of which a synchronous movement stroke of the telescopic rods (1) is ensured.

5. Support surface according to Claims 1 to 4, **characterized in that** the mechanism parts of the telescopic legs (27) and (28) are hidden (27a) and (28a) for optical and practical reasons.

## Revendications

1. Surface de support (3) pour sièges et couchettes, dont l'agencement des surfaces est modifiable dans le sens de la longueur,
**caractérisée en ce que** la modification de l'agencement est mise en oeuvre au moyen d'un mécanisme composé d'un cadre comprenant des fourreaux télescopiques (2), dans lesquels se déplacent au moins deux tiges télescopiques (1), chacune d'elles étant recourbée à son extrémité et entourée d'éléments coulissants (8) sur lesquels est fixée la partie déformable (22) de la surface de support.

2. Surface de support selon la revendication 1, **caractérisée en ce que** les tiges télescopiques (1) comportent, au-delà de leur extrémité recourbée, une zone d'accumulation.

3. Surface de support selon la revendication 1, **caractérisée en ce que** les extrémités recourbées des tiges télescopiques sont recourbées en forme d'arc de cercle ou d'ellipse.

4. Surface de support selon la revendication 1, **caractérisée en ce qu'**un élément terminal (21) non déformable, mais mobile, est joint à la partie déformable (22), cet élément étant indéformable en torsion, ce qui garantit un déplacement linéaire synchrone des tiges télescopiques (1).

5. Surface de support selon les revendications 1 à 4, **caractérisée en ce que** les pièces du mécanisme des branches télescopiques (27) et (28) sont agencées, pour des raisons esthétiques et pratiques, de façon cachée (27a) et (28a).
